# EUROPEAN PATENT SPECIFICATION

(11) **EP 2 978 955 B1**
(45) Date of publication and mention of the grant of the patent: **11.01.2017**
(21) Application number: 13712693.4
(22) Date of filing: 27.03.2013
(51) Int. Cl.: F01N 13/08, F01N 1/16, F02D 9/12, F02B 41/10, F02D 9/06, F02B 37/22

(54) **AN EXHAUST GAS PRESSURE REGULATOR**
ABGASDRUCKREGLER
RÉGULATEUR DE PRESSION DE GAZ D'ÉCHAPPEMENT

(43) Date of publication of application: 03.02.2016
(73) Proprietor: Volvo Truck Corporation, 405 08 Göteborg (SE)
(72) Inventor: TENNEVALL, Peter, SE-212 36 Malmö (SE)
(74) Representative: Volvo Technology Corporation
(86) International application number: PCT/EP2013/000921
(87) International publication number: WO 2014/154226

(56) References cited:
- EP-A1- 1 954 929
- WO-A1-01/81734
- DE-A1- 3 728 681
- US-A- 5 445 248
- US-A1- 2004 216 950

## Description

### Technical Field

The present invention relates to an exhaust gas pressure regulator for an engine. More particularly, the present invention relates to an exhaust gas pressure regulator having a moveable regulating member for controlling the exhaust gas through flow. The present invention also relates to a method for providing such exhaust gas pressure regulator.

### Background

Engines, in particular piston engines used for road vehicles, may be provided with an exhaust gas pressure regulator for allowing exhaust brake functionality. Generally, by preventing exhaust gas to flow out from the engine the exhaust gas will be compressed within the cylinder. As there is no fuel supply during braking, such exhaust gas compression will consequently slow down the vehicle.

For heavy diesel engine road vehicles such as trucks, a turbo-charger is normally arranged in the exhaust gas flow path. For such application, the exhaust gas pressure regulator is provided downstream of the turbo-charger.

EP 1954929 describes an example of an exhaust gas pressure regulator, wherein a moveable member is arranged in a diffuser duct. The moveable member may be positioned in an open position, wherein exhaust gas flow is allowed to flow through the pressure regulator, and a closed position, wherein the moveable member is moved in an end position for restricting the exhaust gas flow. The end position is obtained by arranging the moveable member close to the diffuser duct, such that an outer periphery of the moveable member is moving towards an inner periphery of the diffuser duct.

Although such exhaust gas flow regulator has been proven to be very efficient for various applications, the construction has some associated drawbacks. In order to avoid oscillation problems, the end position must be well defined. During operation, a built up pressure on the turbo side will eventually cause the moveable member to move back towards its open position. Consequently, the pressure on the turbo side will drop whereby the regulating pressure of the exhaust gas pressure regulator again will force the moveable member to its end position. Hence, such pressure variations will cause the moveable member to move back and forth rapidly. If the moveable member is not perfectly aligned with the inner periphery of the diffuser duct, there is a significant risk of oscillation and the tolerances must thus be very small for always ensuring the correct end position.

It would therefore be desired to provide an exhaust gas pressure regulator which provides a more robust operation, and which may be manufactured with reduced demands on tolerances.

### Summary

One object is to achieve an exhaust gas pressure regulator, which creates conditions for a more robust/accurate operation and/or a longer life.

The invention relates to an exhaust pressure regulator according to independent claim 1.

The exhaust gas pressure regulator creates conditions for reducing oscillations. Further, a uniform gap may be achieved when the exhaust pressure regulator is controlled to restrict exhaust gas from flowing through the exhaust gas pressure regulator, through which gap a small amount of exhaust gas is allowed to flow.

The exhaust gas pressure regulator allows for small variations in dimensions without affecting the overall performance negatively.

Preferably, the exhaust gas pressure regulator is controllable between a first operational mode, in which the exhaust gas pressure regulator serves as a normal diffuser, and a second operational mode, in which the exhaust gas pressure regulator prevents a major amount of exhaust gas to flow through, whereby the second operational mode still provides a certain amount of exhaust gas to flow through.The second operational mode is obtained for a number of different positions of the moveable member.

Preferably, the moveable member is arranged at a predetermined radial distance from a surrounding duct when the exhaust gas pressure regulator is in the second operational mode.

The width of said annular gap may be in the range of 0.1 to 1 mm, preferably 0.4 to 0.6 mm. The width should in this context be interpreted as the difference between the radius of an inner periphery of the exhaust gas duct and the radius of an outer periphery of the regulating member. This is advantageous in that the exhaust gas flow path is substantially closed off, such that a pressure may be built up upstream of the exhaust gas pressure regulator.

The regulating member may comprise an external circumferential closing surface, the exhaust gas duct may comprise an internal closing surface, said closing surfaces may be configured for achieving said substantial closing, whereby at least one of said surfaces may extend a first distance in parallel with said first movement direction for achieving said substantial closing for a range of mutual positions along said first direction. Hence, a significant reduction of tolerances is achieved since several closing positions will provide the same functionality, namely to substantially close off the exhaust gas flow path.

In the following, preferred embodiments will the briefly discussed. The exhaust gas duct may form a diffuser, whereby dynamic pressure of the exhaust gas is converted to static pressure. Further, said annular gap may be formed between a narrow portion of said exhaust gas duct having a constant diameter, and a cylindrical portion of said regulating member having a constant diameter, and wherein the longitudinal extension of said cylindrical portion exceeds the longitudinal extension of said narrow portion. In an embodiment where the narrow portion has a slightly larger diameter than the cylindrical portion, the regulating member may be arranged in a number of different positions all providing the same substantial closing of the exhaust gas pressure regulator, as long as at least some part of the cylindrical portion is longitudinally aligned with the narrow portion.

The regulating member may be fixedly attached to a piston being spring-biased for urging said regulating member towards the first end position. Further, the piston may be slidable relative a shaft extending along a longitudinal axis of said exhaust gas pressure regulator. Hence, the regulating member will be urged towards its first end position thus always allowing normal operation of the engine in case of malfunction. Further, a linear movement is effectively provided.

A retainer may be provided at a lateral end of said shaft for preventing said piston to slide beyond said retainer.

The piston may preferably be received in a cylindrical portion forming a closed cavity between said cylindrical portion and said piston. The cylindrical portion may be connected to at least one inlet for supplying pressurized air into said closed cavity. Further, the cylindrical portion may be supported by a circumferential support structure surrounding said cylindrical portion, whereby said support structure is in fluid communication with a circumferential closed chamber for guiding pressurized air into said cylindrical portion. These features are advantageous in that the piston, and the regulating member, may be pressurized in a very robust manner for achieving the exhaust gas flow path shut off.

The cylindrical portion may be formed integrally with said support structure, and said support structure may form a stator for a turbo-compound unit. Hence, the exhaust gas pressure regulator is integrated with the turbo-compound unit in a very efficient manner.

According to a further aspect, a turbo-compound system is provided. The turbo-compound system comprises an exhaust gas pressure regulator according to the first or second aspect arranged upstream of a turbine of a turbo-compound unit.

According to a further aspect, a turbo system is provided. The turbo system comprises a turbo-charger unit arranged upstream of a turbo-compound unit according to the third aspect.

According to a further aspect, a piston engine is provided. The piston engine comprises a turbo system according to the fourth aspect.

According to a further aspect, a heavy vehicle, such as a truck, is provided. The heavy vehicle comprises a piston engine according to fifth aspect.

The invention also relates to a method for providing an exhaust gas pressure regulator according to independent claim 16.

### Brief Description of Drawings

The invention will be described in greater detail in the following, with reference to embodiments that are shown in the attached drawings, in which
Fig. 1 shows schematically an internal combustion engine including an exhaust gas pressure regulator according to an embodiment;
Fig. 2 is a longitudinal section through an exhaust gas pressure regulator according to an embodiment, operated in a first end position;
Fig. 3 is a longitudinal section through the exhaust gas pressure regulator shown in Fig. 2, operated in a position between the first position and a second end position;
Fig. 4a is a longitudinal section through the exhaust gas pressure regulator shown in Fig. 2, operated in the second end position; and
Fig. 4b is longitudinal section through a part of the exhaust gas pressure regulator, operated in the second end position.

### Detailed Description

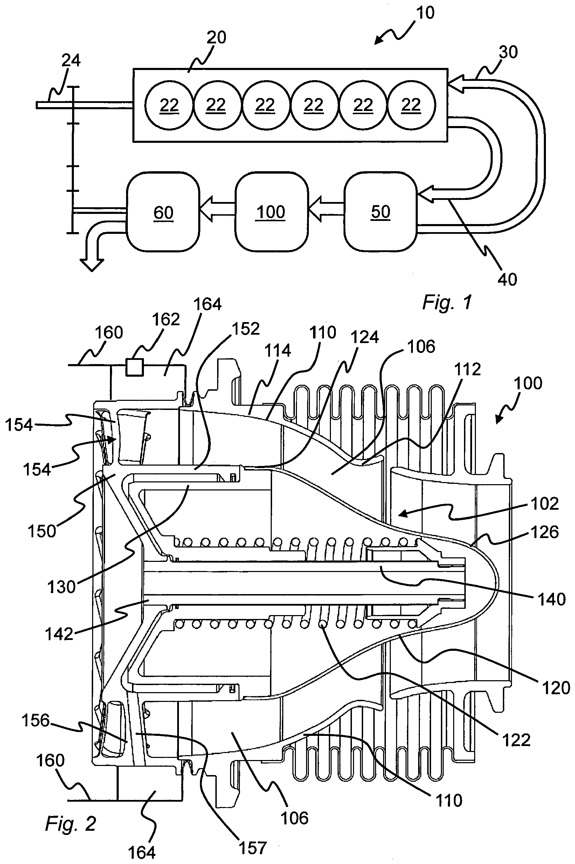

Starting with Fig. 1, a piston engine 10 is shown schematically. The piston engine 10, e.g. a diesel engine for heavy road vehicles such as trucks, buses, or construction machinery, includes an engine block 20 with six cylinders 22, in fluid communication with an air intake 30 and one or several exhaust gas outlets 40. In the present case of six cylinders, two separate exhaust gas outlets may be provided, each exhaust gas outlet receiving exhaust gas from three of the cylinders.

As is shown schematically, the present embodiment includes a number of units 50, 60, 100 which the exhaust gas is in operation with. A turbo-charger unit 50 is provided for receiving the exhaust gas and for compressing air. Further, a turbo-compound unit 60 provides an additional torque to a crankshaft 24 of the engine 10. An exhaust gas pressure regulator 100 is arranged between the turbo-charger unit 50 and the turbo-compound unit 60. The turbo-charger unit 50 as well as the turbo-compound unit 60 are well known in the art and will not be described in further detail herein.

Before turning to particular details of the exhaust gas pressure regulator 100, some general comments on the functionality of the present embodiment will be given. As exhaust gas is flowing out from the engine block 20, the energy of the exhaust gas will be used in the turbo-charger unit 50 for compressing the air before it is introduced in the cylinders 22. The exhaust gas will thereafter flow through the exhaust gas pressure regulator 100 which in its idle position serves to diffuse the exhaust gas flow before it flows through the turbo-compound unit 60. A part of the remaining energy of the exhaust gas flowing out from the exhaust gas pressure regulator 100 will cause a turbine of the turbo-compound unit 60 to rotate, which rotation is coupled to the crankshaft 24 thus adding torque for driving the vehicle. Further components, such as a catalytic converter and a silencer (not shown), are normally also provided downstream of the exhaust pressure regulator 100 in order to form a complete exhaust system for the engine 10.

The exhaust gas pressure regulator 100 is controllable for adjusting the amount of exhaust gas flowing through. During normal operation the exhaust gas pressure regulator is in its idle position whereby no restriction in the exhaust gas flow is provided. However, in some situations it is desirable to compress the exhaust gas in the cylinders, e.g. during braking or engine heat mode for increasing the temperature of the exhaust gas. If this is the case the exhaust gas pressure regulator changes its position into an operational position for at least partly blocking the exhaust gas flow.

Now turning to Fig. 2, the exhaust gas pressure regulator 100 is shown in greater detail. Exhaust gas is introduced at an inlet end 102 and flows through the pressure regulator to an outlet end 104. An exhaust gas flow path 106 is formed between the inlet end 102 and the outlet end 104, which flow path serves to diffuse the exhaust gas as will be further explained below. The exhaust gas flow path 106 forms an annular conduit which has an outer periphery being defined by an exhaust gas duct 110, and an inner periphery being defined by a regulating member 120 which is arranged inside the exhaust gas duct 110. Hence, the diameter of regulating member 120 is less than the diameter of the exhaust gas duct 110 such that exhaust gas flows in the volume formed between these two components 110, 120, i.e. in the exhaust gas flow path 106.

The exhaust gas duct 110 has a longitudinal extension such that it extends in the same direction as the exhaust gas flow, i.e. from the inlet end 102 towards the outlet end 104. The diameter of the exhaust gas duct 110 is preferably varying along its longitudinal direction, such that the cross-sectional area is increasing along the exhaust gas flow direction. Correspondingly, the regulating member 120 has a longitudinal extension such that it extends in the same direction as the exhaust gas flow. The diameter of the regulating member 120 may vary along its longitudinal direction such that the cross-sectional area is increasing along the exhaust gas flow.

The regulating member 120 may thus have a conical shape, or a shape slightly deviating from a strict conical shape as indicated in Fig. 2 in which a bell shape is presented. Correspondingly, the exhaust gas duct 110 may have a conical shape, or a shape slightly deviating from a strict conical shape as indicated in Fig. 2, in which a semi dome shape is presented.

The exhaust gas duct 110 and the regulating member 120 are preferably arranged such that the width of the annular flow path 106 is substantially constant, or slightly increasing, along the longitudinal extension when the exhaust gas pressure regulator 100 is in its idle position. However, as the diameter of the exhaust gas duct 110 and the diameter of the regulating member 120 are increasing along the exhaust gas flow direction, the volume of the flow path 106 will increase along the exhaust gas flow direction whereby a diffusion of the exhaust gas will be provided.

When the exhaust gas pressure regulator is in its idle position, as shown in Fig. 2, the regulating member 120 is maintained in a first end position by means of a spring 122. Hence, the regulating member 120 is always spring biased towards this first end position. For achieving this, the regulating member 120 is securely attached to a piston 130 to which the spring 122 is attached. The piston 130 is slidably mounted on a shaft 140 which is centrally aligned within the exhaust gas duct 110. One lateral end 142 of the shaft 140 is fixedly attached to a nozzle unit 150 which forms the outlet end 104 of the exhaust gas pressure regulator 100. The nozzle unit 150 forms a cylindrical portion 152 extending towards the inlet end 102, by which cylindrical portion 152 the piston 130 is supported. Hence, the piston 130 is arranged coaxially on the shaft 140 such that the outer periphery of the piston 130 is sealed against the cylindrical portion 152 of the nozzle unit 150.

The nozzle unit 150 has an outer portion 154, arranged radially outwards of said cylindrical portion 152 and forming a circumferential support structure surrounding the cylindrical portion 152. The outer portion 154 forms the outlet end 104 of the exhaust gas pressure regulator 100 such that the exhaust gas exits the exhaust gas pressure regulator 100 at the outer portion 154. The outer portion 154 of the nozzle unit 150 is preferably securely attached to an outer duct 160 which serves to guide the exhaust gas further away from the exhaust gas pressure regulator 100. An air inlet 162 is connected to the outer duct 160 for introducing pressurized air in a closed chamber 164 being sealed against the outer portion 154 of the nozzle unit 150. Preferably, the closed chamber 164 is circumferential thus surrounding the entire periphery of the outer portion 154.

One or several nozzle vanes 156 are provided in the outer portion 154 of the nozzle unit 150 for allowing pressurized air to flow from the closed chamber 164 into the cylindrical portion 152 of the nozzle unit 150, which cylindrical portion 152 forms a closed cavity with the piston 130. Feeding channels 157 are thus arranged in one or several nozzle vanes 156 for guiding the pressurized air into the closed cavity. If pressurized air is supplied via the air inlet 162, the piston 130 will be pressed away from the nozzle unit 150 once the air pressure exceeds the compression force of the spring 122. Upon this, the regulating member 120 will move with the piston 130 towards the inlet end 102 of the exhaust gas pressure regulator 100 thus changing the dimensions of the exhaust gas flow path 106.

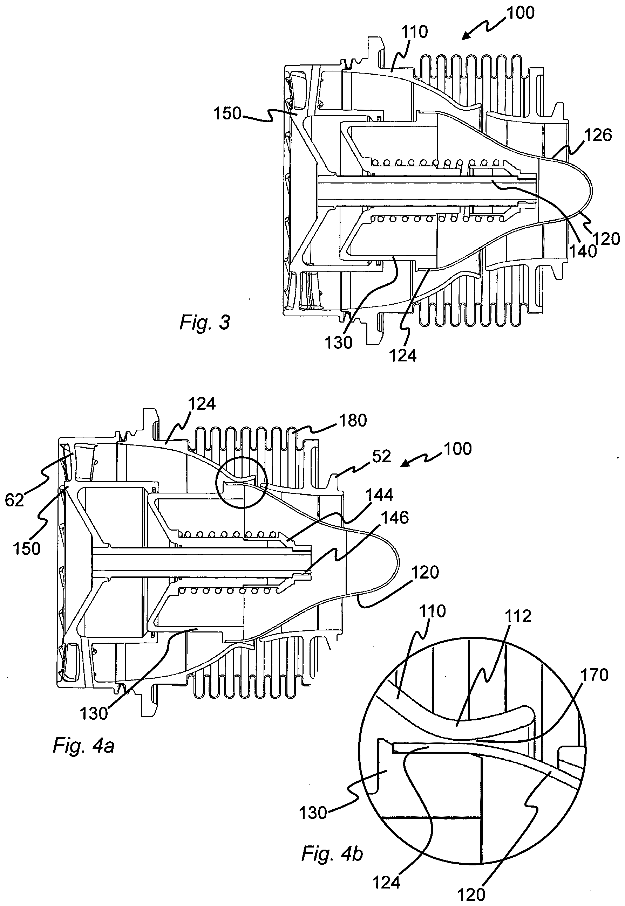

This is shown in Fig. 3, wherein the regulating member 120 is pressed towards the inlet end 102 by means of pressurized air introduced in the cylindrical portion 152 of the nozzle unit 150. Hence, the regulating member 120 is arranged in an operational position somewhere between its first end position, shown in Fig. 2, and a second end position which will be further described below. As the regulating member 120 moves towards the inlet end 102, the width of the annular exhaust gas flow path 106 will decrease. This is due to the fact that a base portion 124 of the regulating member 120, having an increased diameter compared to a distal portion 126 and thus forming an external circumferential closing surface, is narrowing the exhaust gas flow path 106 at the inlet end 102. When the regulating member 120 is arranged in this position, exhaust gas will be partly restricted to flow through the exhaust gas pressure regulator 100.

Now turning to Fig. 4a and 4b, the regulating member 120 is shown when air is introduced in the cylindrical portion 152 at a pressure exceeding the force of the spring 122 as well as the pressure of the exhaust gas flowing for entering the exhaust gas pressure regulator 100. The regulating member 120 is thus arranged at the second end position in which the exhaust gas flow is substantially closed off. As is clearly seen in Fig. 4a, the base portion 124 of the regulating member 120 is aligned with a base portion 112 of the exhaust gas duct 110, which base portion 112 is forming an internal closing surface. The base portion 112 of the exhaust gas duct 110 has a decreased diameter compared to a distal portion 114 of the exhaust gas duct 110, extending from the base portion 112 towards the nozzle unit 150. Hence, a substantial gas flow shut off is achieved by longitudinally aligning the base portion 124 of the regulating member 120 with the base portion 112 of the exhaust gas duct 110.

The base portions 112, 124 are shown in further detail in Fig. 4b. Each one of the base portions 112, 124 has a width, i.e. an extension in the longitudinal direction of the exhaust gas pressure regulator 100. Preferably, the base portion 124 of the regulating member 120 has an external circumferential surface of constant diameter such that the base portion 124 is cylindrical. Correspondingly, the base portion 112 of the exhaust gas duct 110 has an internal circumferential surface which may have a constant diameter such that it is cylindrical. However, as can be seen in Fig. 4b the base portion 112 of the exhaust gas duct 110 is formed by a curvature whereby the base portion 112 corresponds to the portion having the minimum diameter.

The base portion 124 of the regulating member 120 may however instead have a conical shape, of which the walls are slightly tapered. This facilitates mounting, since the base portion 124 may be pressed securely onto the piston 130. By having a relatively small opening angle of the conical shape, such as between 1 and 10°, the operational functionality of the exhaust gas pressure regulator 100 is substantially the same as for a cylindrical shape.

The present embodiment provides a number of advantages. Firstly, by providing the base portion 124 of the regulating member 120 with an outer diameter being slightly less than the inner diameter of the base portion 112 of the exhaust gas duct 110, an annular gap 170 is defined between the base portions 112, 124. The width of the annular gap 170 may be small, e.g. in the range of 0.1 - 1 mm, preferably around 0.5 mm, such that a small amount of exhaust gas is allowed to flow through the exhaust gas pressure regulator 100 even when the regulating member 120 is arranged in the second end position. However, it has been shown that such exhaust gas flowthrough will not affect exhaust breaking performance significantly, but instead reduce the risk of vibrations and oscillations of the regulating member 120. As the annular gap 170 is provided circumferentially, a more robust construction is provided. Secondly, the width of the base portion 124 of the regulating member 120 is larger than the width of the base portion 112 of the exhaust gas duct 110. This allows the base portion 124 of the regulating member 120 to overlap the base portion 112 of the exhaust gas duct 110 such that the second end position of the regulating member 120 in fact may be provided for a range of positions along the longitudinal direction.

Preferably, the second end position for the regulating member 120 is defined by a retainer 144 arranged on the shaft 140 at a second end 146 being opposite the first end 142 at which the shaft 140 is attached to the nozzle unit 150. Hence, the retainer 144 forms a stop for the piston 130 beyond which the piston 130 may not slide. The overlap between the base portions 112, 124 allows for slight variations in the dimensions of the regulating member 120 and the piston 130, such that substantial closing is achieved even if the piston 130 is arranged slightly away from its desired end position.

Now referring to one particular application, the described exhaust gas pressure regulator 100 is connected to an outlet end 52 of a turbo-charger unit 50. The turbo-charger unit 50 is normally connected to an exhaust manifold of the piston engine 10. Further, the exhaust gas pressure regulator 100 is connected to an inlet end 62 of a turbo-compound unit 60. The turbo-compound unit 60 is normally connected to the engine block of the engine 10. Due to the very high temperatures of the components 50, 60, 100, the exhaust gas pressure regulator 100 includes a bellows unit 180 connecting the exhaust gas duct 110 with the turbo-charger 50. The bellows unit 180 is configured to accommodate relative movements between the exhaust gas pressure regulator 100 and the turbo-charger unit 50 e.g. caused by different thermal expansion.

Further, the nozzle unit 150 preferably forms part of the turbo-compound unit 60 such that the outer portion 154 of the nozzle unit 150 is provided with vanes thus forming a nozzle of the turbo-compound unit 60. In such case, one or several of the nozzle vanes 156 are preferably provided with an internal channel for feeding pressurized air.

As already described briefly, the exhaust gas pressure regulator 100 may preferably be used for braking of a vehicle. When a driver pushes down the brake pedal, a specific braking force is requested. An ECU of the vehicle then calculates a corresponding air pressure which forces the piston 130 to move, whereby the regulating member 120 partly closes the exhaust gas pressure regulator 100. For such application, the air pressure may be in the range of 1 to 10 Bars, overcoming the spring force as well as the exhaust gas pressure.

In another application, the exhaust gas pressure regulator 100 is used in engine heat mode when it is desired to increase the temperature of the exhaust gas. In such case, an ECU of the vehicle will calculate the desired throughflow of exhaust gas for providing the desired temperature.

Although the exhaust gas pressure regulator 100 has been described to operate in series with a turbo-charger unit 50 and a turbo-compound unit 60, it is readily understood that other applications may also be suitable for the proposed exhaust gas pressure regulator 100. Preferably, the presented exhaust gas pressure regulator may be arranged in any application where a radial turbine, e.g. of a turbo-charger unit, is followed by an axial turbine, e.g. of a turbo-compound unit or a further turbo-charger unit. Further, the exhaust gas pressure regulator 100 may be used in association with all kinds of piston engines, from one cylinder and upwards, and with two-stroke or four-stroke engines, for road vehicles, marine equipment, etc. Also, although a pneumatic system for operating the exhaust gas pressure regulator 100 has been described, other means such as mechanical and/or hydraulic may also be implemented.

## Claims

1. An exhaust gas pressure regulator (100) for an engine (10), comprising
an exhaust gas duct (110) delimiting an exhaust gas flow path (106) and a regulating member (120), which is moveable in a first direction in the exhaust gas duct (110) between a first end position, in which the exhaust gas flow path (106) is open for exhaust gas throughflow, and a second end position, in which the regulating member (120) at least substantially closes the exhaust gas flow path (106) for exhaust gas throughflow, wherein
the exhaust gas flow path (106) serves to diffuse the exhaust gas and forms an annular conduit which has an outer periphery being defined by the exhaust gas duct (110), and an inner periphery being defined by the regulating member (120) which is arranged inside the exhaust gas duct (110), wherein the cross-sectional area of the flow path (106), when open, is increasing along the exhaust gas flow direction whereby a diffusion of the exhaust gas is provided, and **characterized in that**
said regulating member (120) and said exhaust gas duct (110) are configured for defining an annular gap (170) when the regulating member (120) is positioned in the second end position for allowing exhaust gas to flow through said exhaust gas pressure regulator (100).

2. The exhaust gas pressure regulator according to claim 1, wherein the width of said annular gap (170) is in the range of 0,2 to 1 mm.

3. The exhaust gas pressure regulator according to claim 1 or 2, wherein the regulating member (120) comprises an external circumferential closing surface (124),
the exhaust gas duct (110) comprises an internal closing surface (112),
said closing surfaces (112, 124) are configured for achieving said substantial closing,
at least one of said surfaces (112, 124) extends a first distance in parallel with said first movement direction for achieving said substantial closing for a range of mutual positions along said first direction.

4. The exhaust gas pressure regulator according to any one of claims 1-3,
wherein said exhaust gas duct (110) forms a diffuser, said annular gap (170) is formed between a narrow portion (112) of said exhaust gas duct (110) having a constant diameter, and a cylindrical portion (124) of said regulating member (120) having a constant diameter, and wherein the longitudinal extension of said cylindrical portion (124) exceeds the longitudinal extension of said narrow portion (112).

5. The exhaust gas pressure regulator according to any one of the preceding claims, wherein said regulating member (120) is fixedly attached to a piston (130) being spring-biased for urging said regulating member (120) towards the first end position.

6. The exhaust gas pressure regulator according to claim 5, wherein said piston (130) is slidable relative a shaft (140) extending along a longitudinal axis of said exhaust gas pressure regulator (100).

7. The exhaust gas pressure regulator according to claim 6, wherein a retainer (144) is provided at a lateral end (146) of said shaft (140) for preventing said piston (130) to slide beyond said retainer (144).

8. The exhaust gas pressure regulator according to any one of claims 5-7, wherein said piston (130) is received in a cylindrical portion (152) forming a closed cavity between said cylindrical portion (152) and said piston (130).

9. The exhaust gas pressure regulator according to claim 8, wherein said cylindrical portion (152) is connected to at least one inlet (162) for supplying pressurized air into said closed cavity.

10. The exhaust gas pressure regulator according to claim 9, wherein said cylindrical portion (152) is supported by a circumferential support structure (154) surrounding said cylindrical portion (152), whereby said support structure (154) is in fluid communication with a circumferential closed chamber (164) for guiding pressurized air into said cylindrical portion (152).

11. The exhaust gas pressure regulator according to claim 10, wherein said cylindrical portion (152) is formed integrally with said support structure (154), and wherein said support structure (154) forms a nozzle for a turbo-compound unit (60).

12. A turbo-compound system, comprising an exhaust gas pressure regulator (100) according to any one of the preceding claims arranged upstream of a turbine of a turbo-compound unit (60).

13. A turbo system, comprising a turbo-charger unit (50) arranged upstream of a turbo-compound unit (60) of a turbo-compound system according to claim 12.

14. A piston engine, comprising a turbo system according to claim 13.

15. A heavy vehicle, such as a truck, comprising a piston engine according to claim 14.

16. A method for providing an exhaust gas pressure regulator, comprising the steps of:
providing an exhaust gas duct delimiting an exhaust gas flow path;
providing a regulating member being moveable in a first direction in the exhaust gas duct between a first end position, in which the exhaust gas flow path is open for exhaust gas flowthrough, and a second end position, in which the regulating member at least substantially closes the exhaust gas flow path for exhaust gas flowthrough, wherein
the exhaust gas flow path (106) serves to diffuse the exhaust gas and forms an annular conduit which has an outer periphery being defined by the exhaust gas duct (110), and an inner periphery being defined by the regulating member (120) which is arranged inside the exhaust gas duct (110), wherein the cross-sectional area of the flow path (106), when open, is increasing along the exhaust gas flow direction whereby a diffusion of the exhaust gas is provided, and **characterized in that**
said regulating member and said exhaust gas duct are configured for defining an annular gap when the regulating member is positioned in the second end position for allowing exhaust gas to flow through said exhaust gas pressure regulator.

## Patentansprüche

1. Abgasdruckregler (100) für einen Motor (10), der eine Abgasleitung (110), die einen Abgasströmungsweg (106) begrenzt, und ein Regelglied (120) umfasst, das in einer ersten Richtung in der Abgasleitung (110) zwischen einer ersten Endposition, in der der Abgasströmungsweg (106) für die Abgasdurchströmung geöffnet ist, und einer zweiten Endposition bewegbar ist, in der das Regelglied (120) den Abgasströmungsweg (106) für die Abgasdurchströmung wenigstens im Wesentlichen schließt, wobei
der Abgasströmungsweg (106) dazu dient, das Abgas zu verteilen, und eine ringförmige Leitung bildet, die eine äußere Peripherie, die durch die Abgasleitung (110) definiert ist, und eine innere Peripherie hat, die durch das im Inneren der Abgasleitung (110) angeordnete Regelglied (120) definiert ist, wobei die Querschnittsfläche des Strömungswegs (106) sich in geöffnetem Zustand entlang der Abgasströmungsrichtung vergrößert, wodurch eine Verteilung des Abgases erzielt wird, und **dadurch gekennzeichnet, dass**
das Regelglied (120) und die Abgasleitung (110) so konfiguriert sind, dass sie einen Ringspalt (170) definieren, wenn das Regelglied (120) in der zweiten Endposition positioniert ist, um zu ermöglichen, dass Abgas durch den Abgasdruckregler (100) strömt.

2. Abgasdruckregler nach Anspruch 1, wobei die Breite des Ringspalts (170) im Bereich von 0,2 bis 1 mm liegt.

3. Abgasdruckregler nach Anspruch 1 oder 2, wobei das Regelglied (120) eine äußere Umfangs-Verschlussoberfläche (124) umfasst,
die Abgasleitung (110) eine innere Verschlussoberfläche (112) umfasst,
die Verschlussoberflächen (112, 124) so konfiguriert sind, dass sie im Wesentlichen den Verschluss erzielen,
wenigstens eine der Oberflächen (112, 124) sich über einen ersten Abstand parallel zu der ersten Bewegungsrichtung erstreckt, um für einen Bereich von Positionen zueinander entlang der ersten Richtung im Wesentlichen den Verschluss zu erzielen.

4. Abgasdruckregler nach einem der Ansprüche 1 bis 3, wobei die Abgasleitung (110) einen Diffusor bildet, der Ringspalt (170) zwischen einem schmalen Abschnitt (112) der Abgasleitung (110) mit konstantem Durchmesser und einem zylindrischen Abschnitt (124) des Regelglieds (120) mit konstantem Durchmesser ausgebildet ist, und wobei die Längserstreckung des zylindrischen Abschnitts (124) die Längserstreckung des schmalen Abschnitts (112) übersteigt.

5. Abgasdruckregler nach einem der vorigen Ansprüche, wobei das Regelglied (120) fest an einem Kolben (130) angebracht ist, der federvorgespannt ist, um das Regelglied (120) zu der ersten Endposition zu zwingen.

6. Abgasdruckregler nach Anspruch 5, wobei der Kolben (130) bezüglich einer Welle (140) gleiten kann, die sich entlang einer Längsachse des Abgasdruckreglers (100) erstreckt.

7. Abgasdruckregler nach Anspruch 6, wobei ein Rückhalter (144) an einem seitlichen Ende (146) der Welle (140) vorgesehen ist, um zu verhindern, dass der Kolben (130) über den Rückhalter (144) hinaus gleitet.

8. Abgasdruckregler nach einem der Ansprüche 5 bis 7, wobei der Kolben (130) in einem zylindrischen Abschnitt (152) aufgenommen wird und ein geschlossener Hohlraum zwischen dem zylindrischen Abschnitt (152) und dem Kolben (130) gebildet wird.

9. Abgasdruckregler nach Anspruch 8, wobei der zylindrische Abschnitt (152) mit wenigstens einem Einlass (162) verbunden ist, um Druckluft in den geschlossenen Hohlraum einzuführen.

10. Abgasdruckregler nach Anspruch 9, wobei der zylindrische Abschnitt (152) von einer Umfangs-Tragstruktur (154) getragen wird, die den zylindrischen Abschnitt (152) umgibt, wodurch die Tragstruktur (154) in Fluidkommunikation mit einer geschlossenen Umfangskammer (164) steht, um Druckluft in den zylindrischen Abschnitt (152) zu leiten.

11. Abgasdruckregler nach Anspruch 10, wobei der zylindrische Abschnitt (152) einteilig mit der Tragstruktur (154) ausgebildet ist und wobei die Tragstruktur (154) eine Düse für eine Turboverbundeinheit (60) bildet.

12. Turboverbundsystem, das einen Abgasdruckregler (100) nach einem der vorigen Ansprüche umfasst, der zu einer Turbine einer Turboverbundeinheit (60) vorgelagert ist.

13. Turbosystem, das eine Turboladereinheit (50) umfasst, die zu einer Turboverbundeinheit (60) eines Turboverbundsystems nach Anspruch 12 vorgelagert ist.

14. Kolbenmotor, der ein Turbosystem nach Anspruch 13 umfasst.

15. Schwerfahrzeug, beispielsweise ein Lastwagen, das einen Kolbenmotor nach Anspruch 14 umfasst.

16. Verfahren zur Bereitstellung eines Abgasdruckreglers, das die Schritte umfasst:
Vorsehen einer Abgasleitung, die einen Abgasströmungsweg begrenzt;
Vorsehen eines Regelglieds, das in einer ersten Richtung in der Abgasleitung zwischen einer ersten Endposition, in der der Abgasströmungsweg für die Abgasdurchströmung geöffnet ist, und einer zweiten Endposition bewegbar ist, in der das Regelglied den Abgasströmungsweg für die Abgasdurchströmung wenigstens im Wesentlichen schließt, wobei
der Abgasströmungsweg (106) dazu dient, das Abgas zu verteilen, und eine ringförmige Leitung bildet, die eine äußere Peripherie, die durch die Abgasleitung (110) definiert wird, und eine innere Peripherie hat, die durch das im Inneren der Abgasleitung (110) angeordnete Regelglied (120) definiert wird, wobei die Querschnittsfläche des Strömungswegs (106) sich in geöffnetem Zustand entlang der Abgasströmungsrichtung vergrößert, wodurch eine Verteilung des Abgases erzielt wird, und
**dadurch gekennzeichnet, dass** das Regelglied und die Abgasleitung so konfiguriert sind, dass sie einen Ringspalt definieren, wenn das Regelglied in der zweiten Endposition positioniert ist, um zu ermöglichen, dass Abgas durch den Abgasdruckregler strömt.

## Revendications

1. Régulateur de pression de gaz d'échappement (100) pour un moteur (10), comprenant
un conduit de gaz d'échappement (110) délimitant un chemin d'écoulement de gaz d'échappement (106) et un élément de régulation (120), qui est mobile dans une première direction dans le conduit de gaz d'échappement (110) entre une première position terminale, dans laquelle le chemin d'écoulement de gaz d'échappement (106) est ouvert pour l'écoulement de gaz d'échappement à travers celui-ci, et une deuxième position terminale, dans laquelle l'élément de régulation (120) ferme au moins sensiblement le chemin d'écoulement de gaz d'échappement (106) pour l'écoulement de gaz d'échappement à travers celui-ci, où
le chemin d'écoulement de gaz d'échappement (106) sert à diffuser le gaz d'échappement et forme un conduit annulaire qui a une périphérie extérieure qui est définie par le conduit de gaz d'échappement (110), et une périphérie intérieure qui est définie par l'élément de régulation (120) qui est agencé à l'intérieur du conduit de gaz d'échappement (110), où la zone de section transversale du chemin d'écoulement (106), lorsqu'elle est ouverte, augmente le long de la direction d'écoulement de gaz d'échappement moyennant quoi une diffusion du gaz d'échappement est fournie, et **caractérisé en ce que**
ledit élément de régulation (120) et ledit conduit de gaz d'échappement (110) sont configurés pour définir un espace annulaire (170) lorsque l'élément de régulation (120) est positionné dans la deuxième position terminale pour permettre au gaz d'échappement de s'écouler à travers ledit régulateur de pression de gaz d'échappement (100).

2. Régulateur de pression de gaz d'échappement selon la revendication 1, dans lequel la largeur dudit espace annulaire (170) se situe dans la plage allant de 0,2 à 1 mm.

3. Régulateur de pression de gaz d'échappement selon la revendication 1 ou 2, dans lequel l'élément de régulation (120) comprend une surface de fermeture circonférentielle externe (124),
le conduit de gaz d'échappement (110) comprend une surface de fermeture interne (112),
lesdites surfaces de fermeture (112, 124) sont configurées pour réaliser ladite fermeture substantielle,
au moins l'une desdites surfaces (112, 124) s'étend sur une première distance en parallèle avec ladite première direction de mouvement pour réaliser ladite fermeture substantielle pour une plage de positions mutuelles le long de ladite première direction.

4. Régulateur de pression de gaz d'échappement selon l'une quelconque des revendications 1 à 3, dans lequel ledit conduit de gaz d'échappement (110) forme un diffuseur, ledit espace annulaire (170) est formé entre une partie étroite (112) dudit conduit de gaz d'échappement (110) ayant un diamètre constant, et une partie cylindrique (124) dudit élément de régulation (120) ayant un diamètre constant, et où l'extension longitudinale de ladite partie cylindrique (124) dépasse l'extension longitudinale de ladite partie étroite (112).

5. Régulateur de pression de gaz d'échappement selon l'une quelconque des revendications précédentes, dans lequel ledit élément de régulation (120) est attaché de manière fixe à un piston (130) qui est sollicité par ressort pour pousser ledit élément de régulation (120) vers la première position terminale.

6. Régulateur de pression de gaz d'échappement selon la revendication 5, dans lequel ledit piston (130) peut coulisser par rapport à un arbre (140) s'étendant le long d'un axe longitudinal dudit régulateur de pression de gaz d'échappement (100).

7. Régulateur de pression de gaz d'échappement selon la revendication 6, dans lequel un élément de retenue (144) est prévu au niveau d'une extrémité latérale (146) dudit arbre (140) pour empêcher ledit piston (130) de coulisser au-delà dudit élément de retenue (144).

8. Régulateur de pression de gaz d'échappement selon l'une quelconque des revendications 5 à 7, dans lequel ledit piston (130) est reçu dans une partie cylindrique (152) formant une cavité fermée entre ladite partie cylindrique (152) et ledit piston (130).

9. Régulateur de pression de gaz d'échappement selon la revendication 8, dans lequel ladite partie cylindrique (152) est reliée à au moins une entrée (162) pour fournir de l'air sous pression dans ladite cavité fermée.

10. Régulateur de pression de gaz d'échappement selon la revendication 9, dans lequel ladite partie cylindrique (152) est supportée par une structure de support circonférentielle (154) entourant ladite partie cylindrique (152), moyennant quoi ladite structure de support (154) étant en communication fluidique avec une chambre fermée circonférentielle (164) pour guider l'air sous pression dans ladite partie cylindrique (152).

11. Régulateur de pression de gaz d'échappement selon la revendication 10, dans lequel ladite partie cylindrique (152) est formée d'un seul tenant avec ladite structure de support (154), et où ladite structure de support (154) forme une buse pour une unité de turborécupérateur (60).

12. Système de turborécupérateur, comprenant un régulateur de pression de gaz d'échappement (100) selon l'une quelconque des revendications précédentes agencé en amont d'une turbine d'une unité de turborécupérateur (60).

13. Système de turbocompresseur, comprenant une unité de turbocompresseur (50) agencée en amont d'une unité de turborécupérateur (60) d'un système de turborécupérateur selon la revendication 12.

14. Moteur à piston, comprenant un système de turbocompresseur selon la revendication 13.

15. Véhicule lourd, tel qu'un camion, comprenant un moteur à piston selon la revendication 14.

16. Procédé pour fournir un régulateur de pression de gaz d'échappement, comprenant les étapes qui consistent :
à fournir un conduit de gaz d'échappement délimitant un chemin d'écoulement de gaz d'échappement ;
à fournir un élément de régulation qui est mobile dans une première direction dans le conduit de gaz d'échappement entre une première position terminale, dans laquelle le chemin d'écoulement de gaz d'échappement est ouvert pour l'écoulement de gaz d'échappement à travers celui-ci, et une deuxième position terminale, dans laquelle l'élément de régulation ferme au moins sensiblement le chemin d'écoulement de gaz d'échappement pour l'écoulement de gaz d'échappement à travers celui-ci, où
le chemin d'écoulement de gaz d'échappement (106) sert à diffuser le gaz d'échappement et forme un conduit annulaire qui a une périphérie extérieure qui est définie par le conduit de gaz d'échappement (110), et une périphérie intérieure qui est définie par l'élément de régulation (120) qui est agencé à l'intérieur du conduit de gaz d'échappement (110), où la zone de section transversale du chemin d'écoulement (106), lorsqu'elle est ouverte, augmente le long de la direction d'écoulement de gaz d'échappement moyennant quoi une diffusion du gaz d'échappement est fournie, et **caractérisé en ce que**
ledit élément de régulation et ledit conduit de gaz d'échappement sont configurés pour définir un espace annulaire lorsque l'élément de régulation est positionné dans la deuxième position terminale pour permettre au gaz d'échappement de s'écouler à travers ledit régulateur de pression de gaz d'échappement.
